# EUROPEAN PATENT APPLICATION

(11) **EP 3 613 810 A1**
(43) Date of publication of application: **26.02.2020**
(21) Application number: 19186437.0
(22) Date of filing: 16.07.2019
(51) Int. Cl.: C08L 101/12, C08L 101/04, C08K 5/00, G02F 1/361, G02F 1/061, C09B 67/00, C09B 69/10, C08K 5/5475, C08L 33/14, C08J 3/215, C08J 7/12, C08F 220/22, C08F 220/40, C08F 8/48, C08F 220/34, C08G 18/81, C08G 18/80, C08G 18/28, C08G 18/67, C08J 3/24

(54) **ARTICLES AND COMPOSITIONS COMPRISING HOST POLYMERS AND CHROMOPHORES AND METHODS OF PRODUCING THE SAME**

(30) Priority: 07.08.2018 US 201816057682
(71) Applicant: General Dynamics Mission Systems, Inc., Fairfax, Virginia 22033 (US)
(72) Inventor: Swan, Michael Craig, Fairfax, Virginia 22033 (US); Sylvester, Garrett S., Fairfax, Virginia 22033 (US); Eng, David L.K., Fairfax, Virginia 22033 (US); Carlson, William B., Fairfax, Virginia 22033 (US); Sullivan, Philip A., Fairfax, Virginia 22033 (US); Phelan, Gregory D., Fairfax, Virginia 22033 (US)
(74) Representative: LKGlobal UK Ltd.

(57) **Abstract**

Compositions and articles including host polymers and chromophores and methods of producing the same are provided. In an exemplary embodiment, an article includes a host polymer with a host polymer refractive index. The article also includes a chromophore with a chromophore refractive index that is greater than the host polymer refractive index. The chromophore refractive index changes with changes in an electric field, and the chromophore is dissolved within the host polymer. The article has an article refractive index that is between the host polymer refractive index and the chromophore refractive index.

## Description

### FIELD OF THE INVENTION

The present disclosure generally relates to electro-optically active articles and compositions comprising host polymers and chromophores and methods for producing the same, and more particularly relates to methods for electro-optically active articles and compositions where an article refractive index is tuned to a desired value, and methods of producing the same.

### BACKGROUND

Communications and computing operations are increasingly using optical signals, and these optical signals are typically transferred with optical fibers. The optical signals are electromagnetic radiation, such as light, but the optical signals are typically within the infrared region of the electromagnetic radiation spectrum. The optical signals have frequencies, or wavelengths, and different wavelengths may be used for different purposes. For example, optical signals that are intended to travel longer distances within an optical fiber may have a wavelength of about 1550 nanometers (nm), where optical signals that are intended to travel shorter distances may have different wavelengths, such as about 1300 nm or about 850 nm. Optical signals are often manipulated, such as with optical switches, optical modulators, fiber optic sensors, and other devices. The devices utilized to manipulate optical signals often use differences in refractive index to redirect or delay the optical field.

Accordingly, it is desirable to develop compositions and articles with desired refractive indexes that may be used in devices that manipulate optical signals, and methods of producing the same. In addition, it is desirable to develop compositions and articles with adjustable refractive indexes, such that the refractive index can be changed, and methods for producing the same. Furthermore, other desirable features and characteristics of the present embodiment will become apparent from the subsequent detailed description and the appended claims, taken in conjunction with the accompanying drawings and this background.

### SUMMARY OF THE INVENTION

Compositions and articles including host polymers and chromophores and methods of producing the same are provided. In an exemplary embodiment, an article includes, but is not limited to, a host polymer with a host polymer refractive index. The article further includes, but is not limited to, a chromophore with a chromophore refractive index that is greater than the host polymer refractive index. The chromophore refractive index changes with changes in an electric field, and the chromophore is dissolved within the host polymer. The article has an article refractive index that is between the host polymer refractive index and the chromophore refractive index.

In accordance with another exemplary embodiment, a composition is provided. The composition includes, but is not limited to, a host polymer with a host polymer refractive index of from about 1.4 to about 1.5 at 1550 nanometers. The composition further includes, but is not limited to, a chromophore dissolved within the host polymer. The chromophore has a chromophore refractive index that is greater than the host polymer refractive index, and the chromophore refractive index changes with changes in an electric field.

In accordance with a further exemplary embodiment, a method of producing an article is provided. The method includes determining a desired refractive index. The method further includes dissolving a host polymer in a solvent, where the host polymer has a host polymer refractive index less than the desired refractive index. A chromophore is dissolved in the solvent with the host polymer, where the chromophore has a chromophore refractive index greater than the desired refractive index. The chromophore refractive index changes with changes in an electric field. The method also includes evaporating the solvent to produce the article, where the article has an article refractive index that is about the same as the desired refractive index.

### BRIEF DESCRIPTION OF THE DRAWINGS

The present embodiment will hereinafter be described in conjunction with the following drawing figures, wherein like numerals denote like elements, and wherein:
FIG. 1 is a schematic view illustrating an embodiment of a method of producing a composition in accordance with the teachings herein;
FIG. 2 is a side sectional drawing and schematic view of an embodiment of an article made in accordance with the teachings herein; and
FIG. 3 is a perspective sectional view of an embodiment of an article made in accordance with the teachings herein, where the article is an optical waveguide.

### DETAILED DESCRIPTION

The following detailed description is merely exemplary in nature and is not intended to limit the application and uses of the embodiment described. Furthermore, there is no intention to be bound by any theory presented in the preceding background or the following detailed description.

The speed at which optical signals travel through a medium, or the degree to which they couple to another medium, is dependent on the refractive index of the materials. Material combinations where the refractive index of one of the materials can be changed dynamically to introduce phase changes or new coupling states could be utilized to develop optical modulators, optical switches, fiber optic sensors, or other devices for manipulating optical signals or other types of electromagnetic radiation. Phase changes refers to phases of the light, and may mean a change in the electric field, the magnetic field, or both the electric and magnetic field in various embodiments.

The refractive index of some materials can be changed dynamically under the appropriate conditions. The incorporation of hyper polarizable chromophores into a host polymer matrix can produce an electro-optically (EO active) active material, where the refractive index of the EO active material may be controlled by application of an electric field. This is known as the Pockels effect or the Kerr effect, as understood by those skilled in the art. In the Pockels effect, the change in the refractive index is proportional to the strength of the electric field, but in the Kerr effect the change in the refractive index is proportional to square of the electric field. Therefore, if an EO active material is integrated into a device that interacts with the optical signal, where the refractive index can be altered by the application of an electric field, that device could be utilized to delay, redirect, or otherwise manipulate the signal. This would allow for modulators, switches, or sensors without any moving parts. A multitude of alternate designs are also possible where the relative refractive index of adjacent materials interacting with the optical signal can be altered dynamically.

The materials typically used as the core of optical fibers have known refractive indices. Most polymers have refractive indices that are higher than that of typical optical fiber cores, such as about 1.47 at 1550 nanometers. When designing a device intended to interface with an optical waveguide composed of glass, such as an optical fiber, it is advantageous to work with materials that have the same refractive index as the fiber, as this will minimize coupling losses. Many known polymers with refractive indices that are less than that of known fiber optical core materials are poor choices for optical devices for reasons other than simply their refractive index. For example, many silicon based polymers have a glass transition temperature that is lower than typical fiber optic operational temperatures, such as about 25 degrees Celsius (°C), and materials used in optical devices should have a glass transition temperature that is above operating conditions. A suitable EO material for an optical device should have a glass transition temperature of about 70 °C or greater. Other polymers with refractive indices lower than that of typical fiber optic cores are not suitable because they are too brittle, or they are too soft. In an exemplary embodiment, an EO material for an optical device should have a pencil hardness of about HB or greater. Hydrophobicity is another property found in a superior EO material for optical devices. Hydrophobicity is often measured with a water contact angle, and a material with a water contact angle of about 70 degrees or greater helps to shed water and reduce failures due to water exposure. High hydrophobicity may also facilitate solubility of the chromophore in the host polymer.

Polymers with low Van der Waals forces tend to have lower refractive indices, and many fluorinated polymers tend to have low Van der Waals forces. Fluorine may also decrease refractive index due to a relatively low polarizability that results from tightly bound electrons. Some fluorinated polymers are good candidates for fiber optical devices. In addition, the carbon fluorine bond may not adsorb the wavelengths of light typically used for optical signals as much as the carbon hydrogen bond, so the incorporation of fluorine into the material may reduce photodegradation and signal loss. Polymers with sufficient fluorine content to produce a refractive index that is near that of optical fiber cores tend to be very non-polar. However, known chromophores tend to be polar, so the polar chromophores are generally non-soluble in the fluorinated polymers having refractive indices near that of most optical fiber cores. When non-soluble components are mixed, the resulting product tends to be "hazy" due to phase separation. The haze interferes with the propagation of optical signals and prevents the material from being of optical quality. In general, components used to transfer optical signals should be of optical quality, where dispersions, emulsions, or other combinations that include a phase separation are typically not of optical quality.

It has been found that the refractive index of some objects can be "tuned" statically by controlling the composition of the material: i.e., by controlling a "host polymer/chromophore" composition and ratio, discussed below. As such, the resulting object may be produced with a desired static refractive index, where a "static refractive index" is the refractive index of a material in a neutral state, such as outside of the influence of an electrical field. Once the object is formed, the static refractive index is set. Furthermore, the object can be electro-optically active, such that the refractive index can be changed by applying or changing an electric field. This is referred to as "dynamic tuning" of the refractive index, where the refractive index of the material is changed after fabrication, such as by inducing an electrical field through the material.

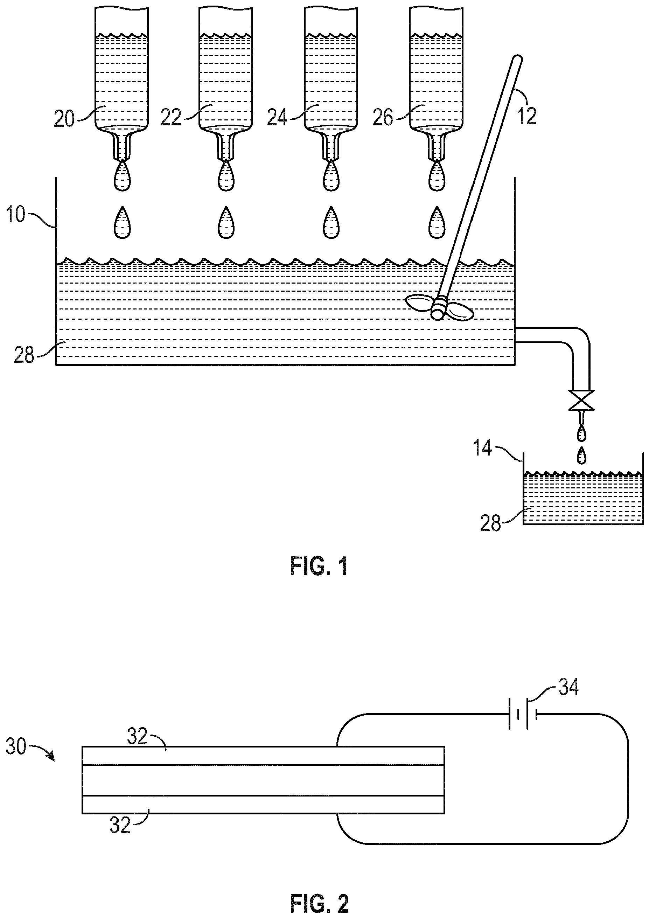

Reference is made to FIG. 1. Several components are added to a vessel **10,** where they are mixed together. The components include a host polymer **20,** a chromophore **22,** a solvent **24,** and optionally one or more additives **26.** The components are mixed, such as with a mixer **12,** to produce a composition **28,** and the composition **28** may then be packaged in a container **14.** However, the composition **28** may alternatively be placed into forms, templates, or other devices used to produce a final desired object, as described more fully below. The vessel **10** may be a tank, a tube, or essentially any structure capable of containing a liquid. The mixer **12** may be an agitator, a static mixer, or essentially any device capable of mixing a liquid. The mixer **12** is optional, in that the components may be mixed using alternative techniques. For example, the host polymer **20** and the chromophore **22** may be pre-dissolved in one or more solvents **24** prior to addition to the vessel **10,** so that mixing in the vessel **10** may not be absolutely required.

In an exemplary embodiment, the host polymer **20** has a host polymer refractive index that is lower than a desired refractive index. As used herein, the term "host polymer refractive index" means the refractive index of pure host polymer material. The desired refractive index is determined such that the resulting object may be used in an optical device in various embodiments. An optical sensor may include a material with a refractive index that is tuned to a value useful for a certain frequency of light of interest for that optical sensor. For example, an optical sensor could include an EO material with a specifically tuned refractive index, such that a change in refractive index caused by a small electric field will create a large optical response. Other embodiments where the refractive index of a material is tuned to a desired refractive index are also possible.

In an exemplary embodiment, the desired refractive index is from about 1.4 to about 1.5, or from about 1.420 to about 1.460, or from about 1.470 to about 1.490, or from about 1.475 to about 1.485 in various embodiments, where the term "refractive index," as used herein, means the ratio of the velocity of electromagnetic radiation in a vacuum to the velocity of electromagnetic radiation in a medium, such that the refractive index is the refractive index of that medium. Other desired refractive indices may be utilized in different embodiments or for different purposes, including but not limited to operation at different optical wavelengths or use with different substrates, optical fibers, cladding materials, core materials, etc. The refractive index may be influenced by the wavelength of the electromagnetic radiation, as well as by temperature. Therefore, unless otherwise specified, refractive indices discussed herein are measured at a wavelength of about 1550 nanometers (nm) and a temperature of about 20 degrees Celsius (°C). The desired refractive index may be selected to be slightly lower than the refractive index of the material typically used in the core of optical fiber for optical signals having a wavelength of about 1550 nm. However, other desired refractive indices may be utilized in alternate embodiments, such as refractive indices slightly lower than that of other optical device components.

In an alternate embodiment, the desired refractive index may be tuned for use in fiber optic cables utilized for alternate wavelengths. For example, the desired refractive index may be from about 1.4 to about 1.5, or from about 1.42 to about 1.46, in different embodiments, at an electromagnetic wavelength of 1,300 nanometers. In another embodiment, the desired refractive index is from about 1.4 to about 1.5, or from about 1.43 to about 1.47, in different embodiments, at an electromagnetic wavelength of 810 nanometers. Other desired refractive indices are also possible in alternate embodiments.

The host polymer refractive index may be about 1.4 or less in an exemplary embodiment, at a wavelength of about 1550 nm, but in alternate embodiments the host polymer refractive index of about 1.440 or less, or about 1.445 or less, or may be from about 1.440 to about 1.445, or about 1.440 to about 1.447, or other values in alternate embodiments. The host polymer **20** is selected with the host polymer refractive index in mind, and the host polymer **20** is also selected such that a glass transition temperature is greater than an operating temperature. The operating temperature may be room temperature in some embodiments, such as from about 0 to about 30 °C, but other operating temperatures are also possible. Many polymers have a refractive index that is greater than the desired refractive index, so embodiments of the host polymer **20** are somewhat limited. The glass transition temperature also limits polymer selection for the host polymer **20.** For example, certain silicon-based polymers have a refractive index below about 1.448, but the glass transition temperature is lower than about 0 °C so these polymers may not be useful in embodiments where the operating temperature is above 0 °C. However, silicon-based polymers may be useful as the host polymer in embodiments where the operating temperature is low, such as cryogenic applications, assuming all other properties are acceptable.

In an exemplary embodiment, the host polymer **20** is a fluorinated polymer, wherein the host polymer **20** comprises fluorine. The presence of fluorine tends to result in non-polar polymers with relatively low refractive indices, and increasing the level of fluorination tends to increase the non-polar nature of the polymer while also lowering the host polymer refractive index. However, polar fluorinated polymers are possible. One exemplary embodiment of the host polymer **20** includes a polymer formed from the monomer 2,2,2-trifluoroethyl methacrylate. In an exemplary embodiment, the host polymer **20** has a number average molecular weight of from about 10,000 Daltons to about 1,000,000 Daltons, or from about 30,000 Daltons to about 500,000 Daltons, or from about 50,000 Daltons to about 250,000 Daltons, in various embodiments. Alternate number average molecular weights are possible in alternate embodiments, including embodiments using 2,2,2-trifluoroethyl methacrylate. In alternate embodiments, the host polymer **20** is produced by reacting one or more acrylate monomers that include fluorine. Alternate embodiments include vinyl polymers, polyethylenes, polypropylenes, acrylonitriles, polystyrenes, polyamides, polyimides, polyaramids, and other types of polymers, where the polymer may or may not be fluorinated. The host polymer **20** may be a co-polymer, where more than one type of monomer is used, and the host polymer **20** may be a combination of different polymers in some embodiments. The host polymer **20** tends to be non-polar, and may have a host polymer solubility in water of about 1:100,000 or less grams host polymer per liter of distilled water at 20 degrees Celsius.

The solvent **24** is selected to dissolve the host polymer **20** and the chromophore, as well as any additives **26** that may optionally be present. In an exemplary embodiment, the solvent **24** is present in the composition **28** at from about 40 to about 90 weight percent, based on a total weight of the composition **28,** but in other embodiments the solvent **24** is present at from about 50 to about 80 weight percent, or from about 50 to about 70 weight percent. A wide variety of solvents **24** may be effective, and the exact solvent **24** used is not critical to the resulting article. In one exemplary embodiment, the solvent **24** is cyclopentanone, but other materials or mixtures are also possible.

The chromophore **22** is an electro-optically active material that can display the Pockels effect and/or the Kerr effect. As such, the chromophore **22** has a chromophore refractive index that changes with changes in an electric field that the chromophore **22** is exposed to. As used herein, the term "chromophore refractive index" refers to the refractive index of pure chromophore material. Therefore, the chromophore **22** has a first chromophore refractive index when in an electric field of about 0 volts per meter (v/m), and the chromophore **22** has a second chromophore refractive index that is different than the first chromophore refractive index when in an electric field of about 1,000 v/m (or essentially any value different than 0 v/m). In an exemplary embodiment, the chromophore refractive index increases with increases in the electric field that the chromophore **22** is exposed to, but in alternate embodiments the chromophore refractive index decreases with increases in the electric field that the chromophore **22** is exposed to.

Several exemplary chromophores **22** are available. For example, 2-[4-(3-{3-[2-(4-{bis-[2-(tert-butyl-dimethyl-silanyloxy)-ethyl]-amino}-phenyl)-vinyl]-5,5-dimethyl-cyclohex-2-enylidene}-propenyl)-3-cyano-5,5-dimethyl-5H-furan-2-ylidene]-malononitrile (referred to herein as CLD1) is one chromophore **22** that may be utilized. Other possible chromophores include, but are not limited to: 3-[2-[4-[bis(2-hydroxyethyl)amino]phenyl]ethenyl]-5,5-dimethyl-2-cyclohex-en-1-one (S-3a); 3-[2-[4-[bis[2-[[(1,1-dimethylethyl)dimethylsilyl]oxy]ethyl]amino]phenyl]-ethenyl]-5,5-dimethyl -2-cyclohexen-1-one; 2-[3-[(1E)-2-[4-[bis[2-[[(1,1-dimethylethyl)dimethylsilyl]oxy]ethyl]amino]phenyl]-ethenyl]-5',5'-dimethycyclohex-2-en-1-ylidene]-acetonitrile; and others. In general, the chromophore **22** is a highly conjugated molecule, may include one or more rings, and often includes an electron donor and an electron acceptor within the molecule. Several different families of chromophore **22** may be utilized in various embodiments, where the family type generally refers to the linking group between the electron donor and the electron acceptor portions of the chromophore **22.** Multiple chromophore classes may be utilized. In an exemplary embodiment, the chromophores **22** include a tri-cyano-furan (TCF) acceptor, and may be classified by conjugated bridge as: simple multi-ethylene, ring-locked (cyclohexene), aromatic (thiophene or furan, azo), and/or a combination of these. Other classes or categories of chromophore **22** may be utilized in alternate embodiments. In an exemplary embodiment, the chromophore refractive index is greater than the desired refractive index and also greater than the host polymer refractive index.

In some embodiments, the chromophore **22** should be soluble in the host polymer 20 to produce an article with optical quality. In many embodiments, the chromophore **22** is relatively polar and the host polymer **20** is relatively non-polar, so incompatibility between the chromophore **22** and the host polymer **20** due to insolubility is possible. In other embodiments, the chromophore **22** may be chemically bound to the host polymer **20,** as discussed more fully below.

In some embodiments, the chromophore **22** is fluorinated to increase solubility in a non-polar polymer. However, in some embodiments it may be possible to combine the chromophore **22** and the host polymer **20** without fluorinating the chromophore **22.** In an exemplary embodiment, a host polymer **20** formed from the monomer 2,2,2-trifluoroethyle methacrylate at a number average molecular weight of about 100,000 was combined with 2-[4-(3-{3-[2-(4-{bis-[2-(tert-butyl-dimethyl-silanyloxy)-ethyl]-amino}-phenyl)-vinyl]-5,5-dimethyl-cyclohex-2-enylidene}-propenyl)-3-cyano-5,5-dimethyl-5H-furan-2-ylidene]-malononitrile (CLD1) as the chromophore **22** in cyclopentanone as the solvent **24.** The CLD1 was present at from about 5 to about 40 weight percent of the solids based on a total solids weight, where the total solids weight is the sum of the weight of the host polymer **20** and the chromophore **22.** The host polymer **20** had a glass transition temperature of about 75 °C, and the resulting article with the host polymer **20** and the chromophore **22** had a glass transition temperature of about 110 °C. As such, the article had a higher glass transition temperature than the host polymer **20.** The increased glass transition temperature with the chromophore **22** dissolved in the host polymer **20** suggests the host polymer **20** and the chromophore **22** had some interaction, such as some hydrogen bonding, but this description is not bound by any theory regarding such interaction.

The chromophore **22** may be fluorinated in a variety of manners, including synthesis of a chromophore **22** that includes fluorine. One exemplary technique for fluorinating the chromophore **22** is described below. The CLD1 molecule has tertbutyldimethylsilyl (TBDMS) protecting groups. TBDMS can be removed through hydrolysis using hydrochloric acid (HC1). The CLD1 is then contacted with a fluorinated carboxylic acid and dicyclohexylcarbimide (DCC). The reaction modifies the CLD1 by the creation of an ester that contains fluorinated groups. There is a purposeful ethyl (CH2CH2) spacer between the ester and the fluorinated chain for stability. At least two suitable carboxylic acids are available, including but not limited to: 4,4,4-trifluorobutyric acid and 3,3,4,4,5,5,6,6,7,7,8,8,9,9,9-tridecafluorononanoic acid.

The CLD1 was dissolved into ethanol under argon and heated until reflux. The refluxing ethanol was acidified using 1 normal HCl. The solution was allowed to reflux for 6 hours and the chromophore was then precipitated with water and filtered. The solid material was washed with 1 liter of water and dried under vacuum. The dried solid was dissolved into methylene chloride at 0 °C with 5 mole percent dimethyl aminopyridine and 3,3,4,4,5,5,6,6,7,7,8,8,9,9,9-tridecafluorononanoic acid. To the solution was added a 3 molar excess of DCC. The solution was allowed to stir overnight under argon, but within minutes a precipitate formed. The precipitate was filtered and had the correct stoichiometric amount of the side product dicylcohexyl urea. The fluorinated chromophore was added to a column of silica and purified by chromatography.

In some embodiments, the chromophore **22** is chemically bound to the host polymer **20,** as briefly mentioned above. This may be done in a variety of manners, including but not limited to use of the chromophore **22** as a crosslinking agent to crosslink the host polymer **20,** tethering of the chromophore **22** to the host polymer **20,** incorporating the chromophore **22** into the polymeric chain of the host polymer **20,** and combinations thereof. There may be some tuning involved with the chromophore **22** to balance the amount of functional groups on the host polymer **20** with those on the chromophore **22** to achieve the desired refractive index and crosslinking. A few examples of chemical bonding between a chromophore **22** and a host polymer **20** are listed below to better illustrate the concept.

### Representative Example 1: Crosslinking with a trifluorovinyl ether functional chromophore, as illustrated below.

Part 1. Synthesis of trifluorovinyl ether functional chromophore. 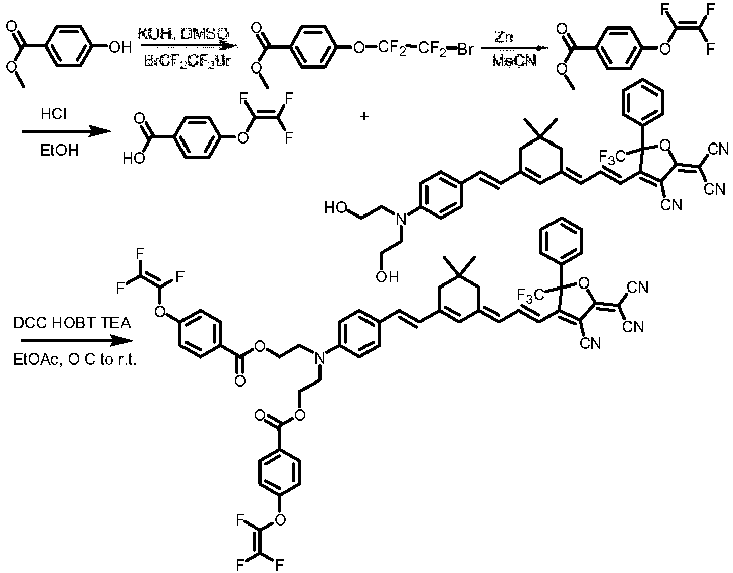
Part 2. Synthesis of trifluorovinyl function methacrylate monomer and polymer. 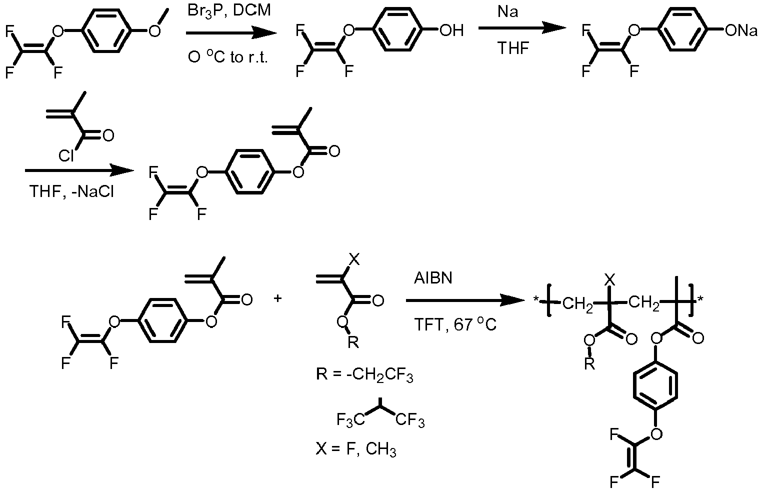
Part 3. Crosslinking through 2+2 cylcoaddition formation of cyclobutene groups. The chromophore **22** aids in crosslinking the host polymer **20** as well as becoming part of the polymer network. The polymer network can be tuned to a refractive index of 1.447 or other desired refractive indices.

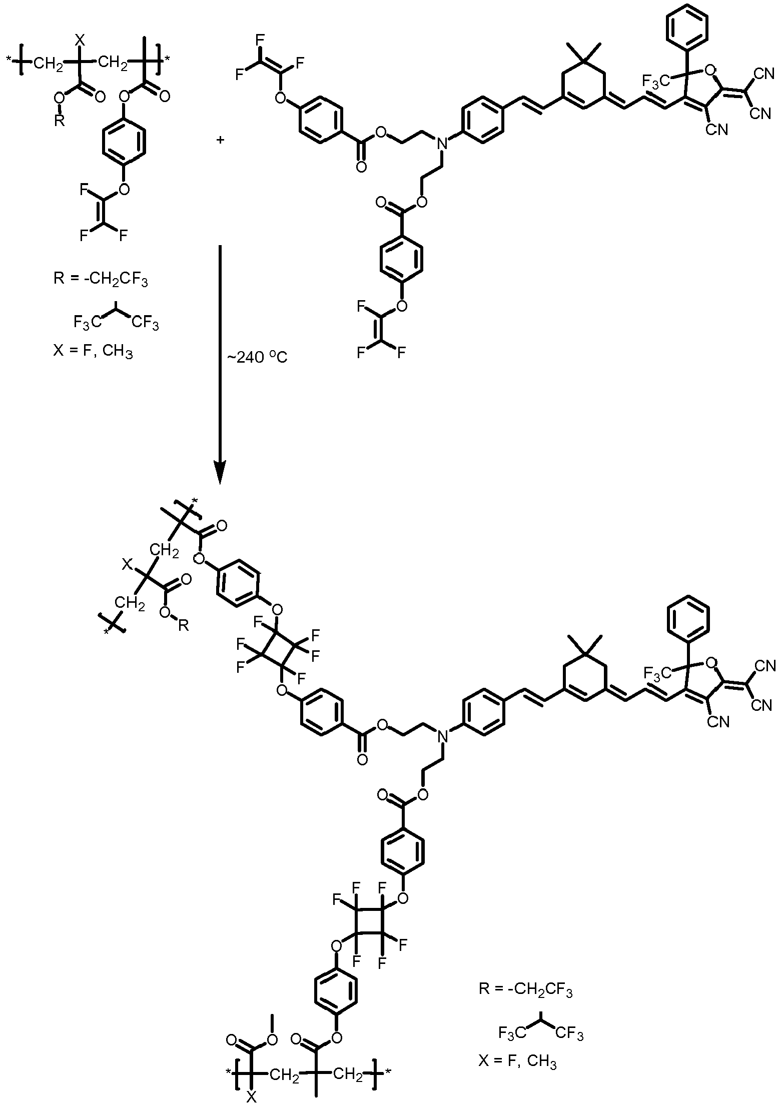

Representative Example 1 summary. Trifluorovinyl ether functional groups allow for crosslinked polymer networks that contain the optically active chromophore **22** covalently bonded to the polymer chains of the host polymer **20.** The exemplary process starts in part 1 where an example chromophore **22** is functionalized with trifluorovinyl ether groups. The placement of trifluorovinyl ether groups onto the chromophore **22** can be accomplished by contacting a benzoic acid derivative that contains a trifluorovinyl ether group with the chromophore **22** and the use of dicyclohexylcarbodiimide to move the reaction forward. In an exemplary embodiment, Part 2 of the process is to create an acrylic monomer that has the trifluorovinyl ether group. This is accomplished by contacting a sodium phenolate that contains a trifluorovinyl ether group with methacrylic acid chloride. The resulting acrylic monomer that has a functional trifluorovinyl ether groups is copolymerized with fluorinated acrylic monomers and can yield host polymers **20** with a refractive index in the range of from about 1.37 to about 1.42. The trifluorovinyl ether monomer may have a concentration of 5% by weight to 30% by weight, based on a total weight of the polymer. The triflurovinyl ether functionalized chromophore and polymer system are then spin coated together where the chromophore concentration ranges from 5% to 40% by weight, based on a total weight of the polymer. The system is poled and heated simultaneously. A 2+2 cycloaddition takes place between the trifluorovinylether groups on the chromophore **22** and the trifluorovinylether groups on the host polymer **20.** The result is a covalent chemical bond and connection through a fluorinated cyclobutene group between the host polymer **20** and chromophore **22.** The crosslinking locks the chromophore **22** into the poling position.

### Representative Example 2. Chemical bonding with an alkyne functional group and an azide functional group.

Part 1. Synthesis of an alkyne functional chromophore **22.** The alkyne is commercially available. The reaction takes place through DCC coupling.

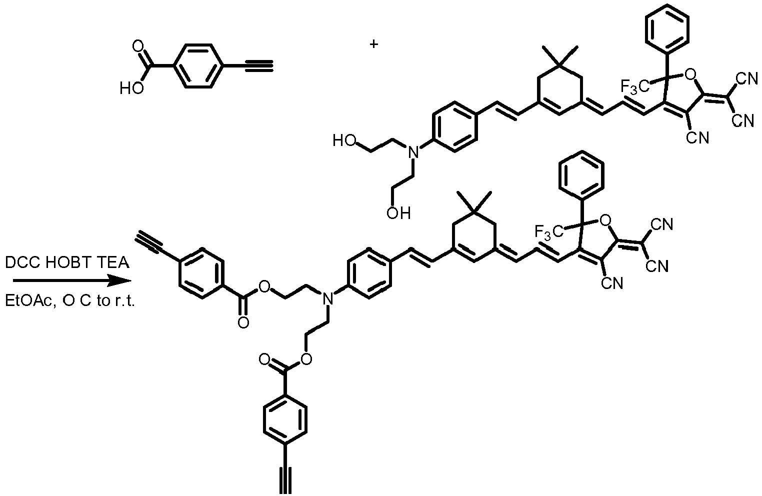

Part 2. Synthesis of azide methacrylate monomer and host polymer **20.** The azide methacrylate may have a refractive index of about 1.48, so the host polymer **20** can be tuned to a refractive index of from about 1.40 to about 1.42. Then, when the click chemistry happens as described below, the final result may be at or very near a desired refractive index of 1.447. The azide monomer is made through DCC coupling reaction.

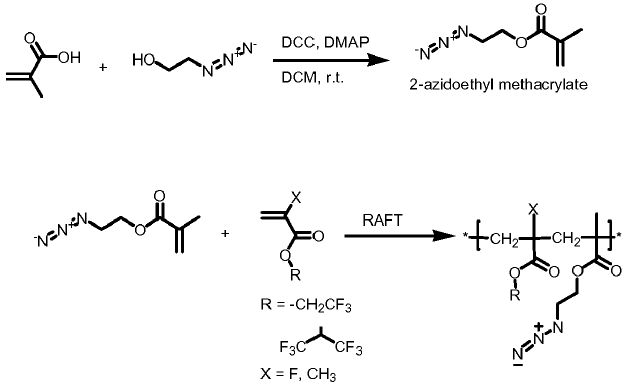

Part 3. Crosslinking through Husigan's 1,3-dipolar cycloadditon and formation of triazole groups. The cycloaddition can yield substitution on the triazole in the 1,4 or 1,5 positions (1,5 is shown). The chromophore **22** aids in crosslinking the host polymer **20** as well as becoming part of the polymer network. The polymer network can be tuned to a desired refractive index of 1.447 through careful synthesis of the host polymer **20.**

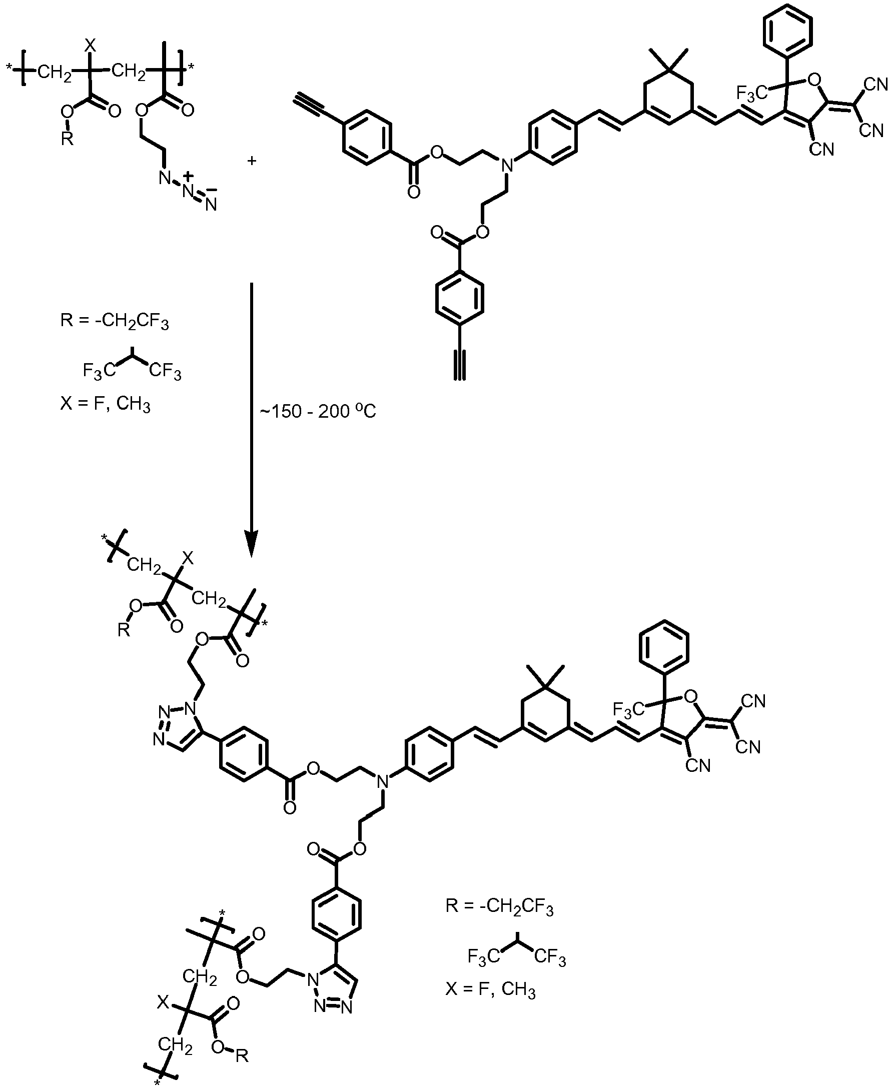

Representative Example 2 Summary. Click chemistry involves cycloaddition between an alkyne and an azide. The functional groups in click chemistry allow for crosslinked polymer networks that contain the optically active chromophore **22** covalently bonded to the polymer chains of the host polymer **20.** The exemplary process description starts in part 1 where the chromophore **22** is functionalized with alkyne groups. The placement of alkyne groups onto the chromophore **22** can be accomplished by contacting a benzoic acid derivative that contains an alkyne moiety (these molecules are commercially available) with the chromophore **22** and the use of dicyclohexylcarbodiimide to move the reaction forward. Part 2 of the exemplary process creates an acrylic monomer that has the azide group. This is accomplished by contacting 2-azidoethanol with methacrylic acid and forming the ester with dicyclohexylcarbodiimide. The resulting acrylic monomer that has a functional azide groups is copolymerized with fluorinated acrylic monomers through RAFT polymerization at 40 °C to yield polymers that may have a refractive index in the range of about 1.37 to about 1.42. The azide containing monomer has a concentration of 5% by weight to 30% by weight, based on a total weight of the resulting polymer. The alkyne functionalized chromophore **22** and the azide polymer system are then spin coated together where the chromophore **22** concentration ranges from about 5% to about 40% by weight, based on a total weight of the polymer. The system is poled and heated simultaneously. A Husigan's 1,3-dipolar cycloaddition takes place between the alkyne groups on the chromophore **22** and the azide on the host polymer **20.** The result is a covalent bond through a triazole group between the host polymer **20** and the chromophore **22.** The crosslinking locks the chromophore **22** into the poling position.

Representative Example 3. Block polymers with chromophores. The system described in this representative Example 3 is a method to create non-linear optical (NLO) functional polymers. Typically, when a polymerizable monomer and chromophore **22** are copolymerized the resulting polymer has blocks of monomer (A) and blocks of chromophore (B). It is generally considered preferable if the monomer (A) and chromophore (B) are randomly spaced in the resulting polymer. This representative Example 3 allows for random polymers be formed.

Part 1. The first part of this process is to form the polymer system. The polymer system is based upon isocyanate functional methacrylate units. The isocyanate is contacted with what is called a blocking agent. The blocking agent is a protection group for the isocyanate. The blocking agent can be removed by heating. Different blocking groups are removed at different temperatures. A copolymer is formed between the blocked methacrylate and the fluorinated methacrylate to yield a polymer system that may have a refractive index of about 1.40 - 1.42.

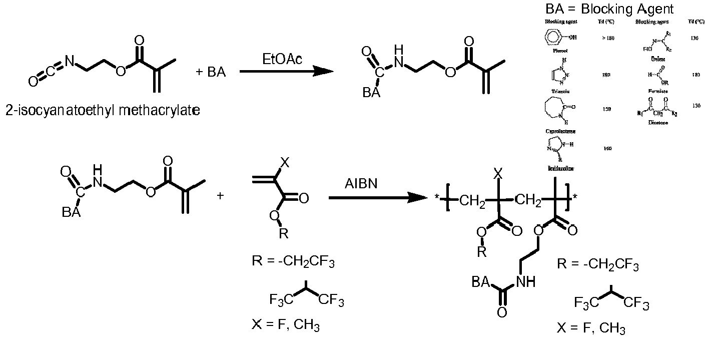

Part 2. There is little done to the chromophore 22 in this representative Example 3. The chromophore **22** may have one hydroxy (OH) (or other functional group) for the chromophore 22 being tethered to the polymer backbone or two OH's (or other functional group) for the chromophore crosslinking the polymer backbones. 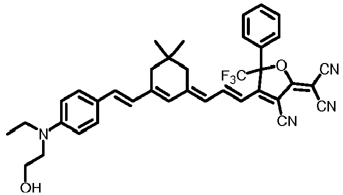 or

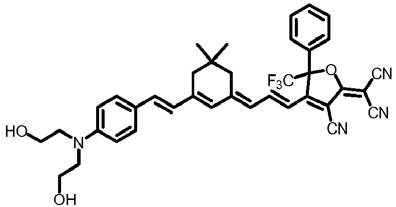

Part 3. A solution of chromophore 22, either mono functional, di functional, polyfunctional, or a combination, and polymer is created and spin casted. This initial coating system is a guest host system with the chromophore 22 as the guest and the polymer as a host. The coating is heated until the blocking agent is removed.

Part 3(a). In the case of monofunctional chromophore **22,** the resulting host polymer **20** that contains the NLO material has the NLO material tethered to the polymer backbone and randomly distributed. While statistically there could be a block of chromophore units in the polymer backbone, such occurrences will be rare when the chromophore concentration is equal to or less than 25%. This is NOT a crosslinked system and the host polymer **20** may remain thermoplastic. See the illustration below.

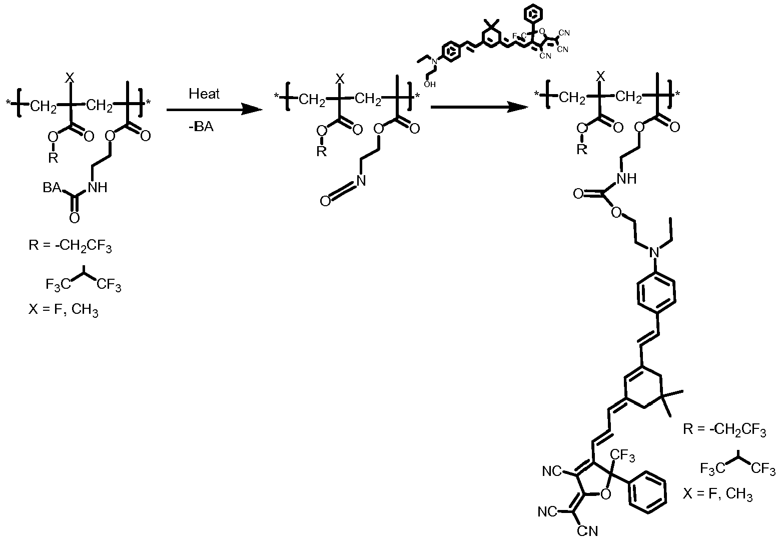

Part 3(b). In the case of a polyfunctional chromophore 22, the NLO material acts as a crosslinking agent. The chromophore **22** can covalently bind two or more polymeric chains together. However, the crosslinking remains randomly distributed in the polymer network. While statistically adjacent chromophores **22** are possible, such occurrences will be rare due to the random distribution along the polymer backbone. The resulting material is a thermoset.

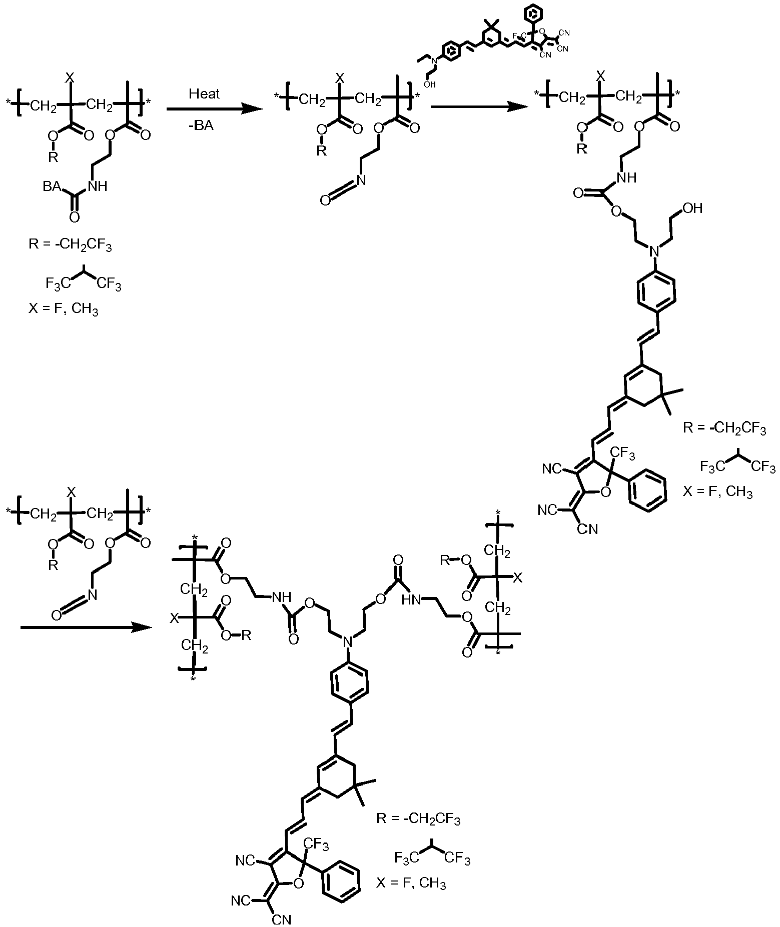

The composition **28** may include several materials other than the host polymer **20** and the chromophore **22.** A variety of additives **26** may optionally be added to the vessel **10.** The additive **26,** if present at all, may include one or more of hindered amine light stabilizers (HALS), ultraviolet light absorbers, surfactants, plasticizers, anti-oxidants, stabilizers, flame retardants, blowing agents, antistatic agents, coloring agents, and a wide variety of other additives.

The composition **28** within vessel **10** may be formed into an article **30,** as illustrated in an exemplary embodiment in FIG. 2 with continuing reference to FIG. 1. The article **30** is formed by evaporating solvent **24** from the composition **28,** such that the composition **28** is a liquid and the article **30** is a solid. In general, any solid forms of the host polymer **20** and the chromophore **22** within the host polymer **20** are referred to herein as the "article **30",** so bulk solid blocks that may later be melted and formed into alternate sizes and/or shapes are an article **30.** The article **30** includes the host polymer **20** at from about 60 to about 95 weight percent, based on a total weight of the article **30.** The article **30** also includes the chromophore **22** at from at least about 5 weight percent in an exemplary embodiment, based on the total weight of the article **30,** but in alternate embodiments the article **30** includes the chromophore from at least about 10 weight percent, or at from about 10 weight percent to about 30 weight percent in various embodiments. The chromophore **22** should be present within the host polymer **20** at a sufficient concentration to provide electro-optical activity for the article **30.** The article **30** may also include the solvent **24** at from about 0 to about 20 weight percent, based on a total weight of the article **30.** The one or more additives **26** may optionally be present in the article **30** at from about 0 to about 10 weight percent, based on a total weight of the article **30.**

In an exemplary embodiment, the chromophore **22** is dissolved within the host polymer **20.** A visual test is often effective at determining if the chromophore **22** is in solution, or dissolved, within the host polymer **20,** where the resulting article **30** is not "hazy." More specifically, the resulting article **30** has negligible light scattering at a wavelength of about 633 nanometers (nm), where the article **30** tested has a thickness of about 1 to about 5 micrometers at the testing point. The article **30** may be of optical quality, and an optical quality article **30** has little to no "haze" such that the components are dissolved and in solution.

The article **30** may be formed by depositing the composition by spin deposition, or by placing the composition **28** from the vessel **10** into a mold, or by doctor blading or otherwise positioning the composition **28** in a desired location, and then evaporating the solvent **24.** Other techniques for forming the article **30** from the composition **28** are also possible. The solvent **24** may be evaporated by heating, or by a gas flow, or simply by waiting and allowing the solvent to evaporate, or by other techniques. The method used to evaporate the solvent **24** is not critical to the function and operation of the article **30.**

Once the article **30** is formed, electrodes **32** may be formed in contact with, or in close proximity to, the article **30.** As such, the electrodes **32** can induce an electric field at the position of the article **30,** so the chromophore **22** within the article **30** is exposed to the electric field. In an exemplary embodiment, the chromophore **22** is poled within the article **30** to induce the electro-optical activity. Poling is the aligning of the chromophore **22** along a specified axis within the article **30.** In an exemplary embodiment, the article **30** is heated to above an article glass transition temperature, and the electric field is induced at the position of the article **30.** The electric field is positioned to align the chromophore **22** along a desired specific axis. The article **30** is then cooled to below the article glass transition temperature while under the influence of the electric field such that the chromophore **22** is fixed in position and alignment, i.e. poled, within the article **30.** The technique may be referred to as "electric field poling" in the relevant literature. Alternate poling techniques may also be used, such as inducing an electric field within the article **30** as the solvent **24** evaporates.

The electrodes **32** may be formed by electrolysis, or by chemical vapor deposition, or by other techniques. In an exemplary embodiment, the electrodes **32** are formed of gold with an electrode thickness of about 0.1 to about 50 microns, however other thicknesses may be used in alternate embodiments. The electrodes **32** may be thin enough that they do not interfere with electromagnetic radiation, so an article refractive index can be measured through the electrodes **32.** For example, electrode thicknesses of from about 25 to about 50 nanometers may be employed for effectively transparent electrodes **32.** Also, the electrodes **32** may be utilized with the article **30** in an optical switch, an optical modulator, or other optical device, where the electrodes **32** are used to induce the desired electrical field at the position of the article **30** without interfering with optical functionality. A power source **34** may be used with the electrodes **32** to induce the electric field for poling or for operation of the electrodes **32** in conjunction with an optical device, such as an optical modulator.

The article **30** has an article refractive index that is about the same as the desired refractive index, such as no more than about 1% different than the desired refractive index, or no more than about 0.1% different than the desired refractive index in some embodiments. As used herein, the term "article refractive index" refers to the refractive index of the article **30** in the absence of an electrical field. As such, the article refractive index is typically between the host polymer refractive index and the chromophore refractive index, where the various components of the article **30** tend to influence the article refractive index. Furthermore, the article refractive index refers to the refractive index of the article **30** in the absence of an electrical field, or in a zero field state. Therefore, exposing the article **30** (and the incorporated chromophores **22**) to an electrical field changes the refractive index of the article **30** from a zero field article refractive index to a refractive index of the article **30** that is different than the article refractive index, i.e., the refractive index of the article in a zero field state.

The article refractive index can be tuned to a variety of different desired refractive indices utilizing the techniques described above. The host polymer refractive index is less than the desired refractive index, and the chromophore refractive index is greater than the desired refractive index, as mentioned above. The article refractive index is influenced by both the host polymer refractive index and the chromophore refractive index, so the article refractive index can be tuned by adjusting the ratios of the host polymer **20** and the chromophore **22,** as well as the ratio of optional additives **26** that may also influence the article refractive index. For example, the article refractive index can be increased by increasing the ratio of chromophore **22** to host polymer **20,** so different desired refractive indices can be utilized with one specific host polymer **20** and one specific chromophore **22.** Furthermore, the host polymer **20** and the chromophore **22** may be selected such that the host polymer refractive index and the chromophore refractive index, respectively, are at a useful value for tuning the article refractive index. As such, an article **30** with an article refractive index that is about the same as the desired refractive index can be formed, where the article **30** is electro-optically active.

The article **30** has other properties that may be useful for a desired purpose, such as for use in an optical device that will interface with an optical fiber. In an exemplary embodiment, the article **30** has an article glass transition temperature of about 70 °C or greater, and an article pencil hardness of about HB or greater. The article **30** may also have an article water contact angle of about 70 degrees or greater. Other desired properties include physical robustness, inertness, transparency and/or lack of adsorption of light at a desired wavelength (such as about 1550 nanometers), and compatibility with other materials used in optical fibers.

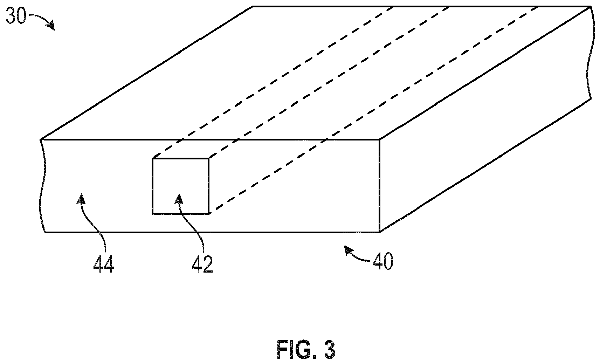

An exemplary rectangular optical waveguide **40** that could be implemented in an optical device is illustrated in FIG. 3, with continuing reference to FIGS. 1 and 2. The optical waveguide **40** includes a core **42** and a cladding **44,** where the cladding **44** is formed of a transparent material with a suitable cladding refractive index. The optical waveguide **40** illustrated in FIG. 3 could have other shapes in alternate embodiments, such as a circular or square cross section, a triangular cross section, or other shapes. The illustrated rectangular optical waveguide **40** is one embodiment of a waveguide, and other embodiments could be employed within the scope of this description. For example, the cladding **44** may include fused silica, silicon dioxide, various polymers, ceramics, and/or crystalline materials, but many materials may be used. The core **42** is the article **30** in the illustrated embodiment. The desired refractive index (and the article refractive index) are well matched to the optical fiber core refractive index, so that the optical signal couples from the optical fiber to the optical waveguide **40** efficiently, with low coupling loss. In an exemplary embodiment, when an electric field is applied across in the article **30,** the electro-optical activity results in a slight change in the article refractive index such that the speed of propagation is altered, and a phase delay is introduced. The same principle can be utilized to incorporate the article **30** into other designs for optical modulators, optical switches, fiber optic sensors, or other optical devices. The article **30** can also be employed for alternate uses where a tunable refractive index combined with electro-optical activity is desired.

It was discovered that incorporation of fluorine into the host polymer **20** had benefits, some of which were unexpected. For example, incorporation of fluorine into the host polymer **20** increased the glass transition temperature of the article **30** compared to a comparable host polymer **20** that had hydrogen in the same place as the fluorine. Light transmission at 1550 nanometers has lower losses due to less adsorption, again compared to a comparable host polymer **20** with hydrogen in place of the fluorine. The refractive index of the host polymer **20** was lowered, compared to a comparable host polymer **20** with hydrogen in place of the fluorine, and the solubility of the chromophore **22** was improved. It was also discovered that the article **30** had higher electro-optical activity than a comparable host polymer **20** with hydrogen in place of the fluorine. The following example demonstrates how incorporation of fluorine into the host polymer **20** was found to increase the EO activity of the article **30.** This increased EO activity is desirable, because it can allow for lower loadings of chromophore **22** for a desired activity, or it can allow for higher EO activities for an article **30.**

For example, an 11% CLD-1 solution in polymethyl methacrylate has been described in the literature with an EO Pockels coefficient of 30 picometers per volt (pm/V.) See: Cheng Zhang and Larry R. Dalton. "Low Vπ Electrooptic Modulators from CLD-1: Chromophore Design and Synthesis, Material Processing, and Characterization." Chemistry or Materials 2001, 13, 3043-3050. It has been discovered that an about 11% CLD-1 solution in polytrifluoroethyl methacrylate has an EO Pockels coefficient of about 54 pm/V. The fluorinated polymer produced a larger Pockels coefficient, despite having about the same concentration of chromophore (i.e., CLD-1).

While at least one exemplary embodiment has been presented in the foregoing detailed description, it should be appreciated that a vast number of variations exist. It should also be appreciated that the exemplary embodiment or exemplary embodiments are only examples, and are not intended to limit the scope, applicability, or configuration of the application in any way. Rather, the foregoing detailed description will provide those skilled in the art with a convenient road map for implementing one or more embodiments, it being understood that various changes may be made in the function and arrangement of elements described in an exemplary embodiment without departing from the scope, as set forth in the appended claims.

The present disclosure may be further described by the following Aspects.
Aspect 1. An article comprising:
   a host polymer having a host polymer refractive index; and
   a chromophore, wherein the chromophore has a chromophore refractive index that is greater than the host polymer refractive index, wherein the chromophore refractive index changes with changes in an electric field, wherein the chromophore is dissolved within the host polymer, and wherein;
   the article has an article refractive index between the host polymer refractive index and the chromophore refractive index.
Aspect 2. The article of Aspect 1, wherein the host polymer comprises fluorine.
Aspect 3. The article of Aspects 1 or 2, wherein the host polymer refractive index is about 1.445 or less at a wavelength of 1550 nanometers.
Aspect 4. The article of Aspects 1-3, wherein the chromophore comprises fluorine.
Aspect 5. The article of Aspects 1-4, wherein the host polymer is produced by reacting one or more monomers, wherein the one or more monomers comprise a fluorinated acrylate.
Aspect 6. The article of Aspects 1-5, wherein the host polymer and the chromophore are chemically bound together.
Aspect 7. The article of Aspects 1-6, wherein the article refractive index is from about 1.4 to about 1.5 at a wavelength of about 1550 nanometers.
Aspect 8. The article of Aspects 1-7, wherein the chromophore is poled within the article.
Aspect 9. The article of Aspects 1-8, wherein the article comprises the chromophore at about 10 weight percent or more, based on a total weight of the article.
Aspect 10. The article of Aspects 1-9, wherein the article has an article glass transition temperature of about 70 degrees Celsius or higher.
Aspect 11. The article of Aspects 1-10, wherein the host polymer comprises poly 2,2,2-trifluoroethyl methacrylate.
Aspect 12. The article of Aspect 11, wherein the chromophore comprises 2-[4-(3-{3-[2-(4-{bis-[2-(tert-butyl-dimethyl-silanyloxy)-ethyl]-amino}-phenyl)-vinyl]-5,5-dimethyl-cyclohex-2-enylidene}-propenyl)-3-cyano-5,5-dimethyl-5H-furan-2-ylidene]-malononitrile (CLD1).
Aspect 13. The article of Aspects 1-12, wherein the article has an article pencil hardness of HB or greater; and the article has an article water contact angle of 70 degrees or greater.
Aspect 14. A composition comprising:
   a host polymer having a host polymer refractive index of from about 1.4 to about 1.5 at 1550 nanometers;
   a chromophore dissolved within the host polymer, wherein the chromophore has a chromophore refractive index greater than the host polymer refractive index, and wherein the chromophore refractive index changes with changes in an electric field.
Aspect 15. A method of producing an article comprising:
   determining a desired refractive index;
   dissolving a host polymer in a solvent, wherein the host polymer has a host polymer refractive index less than the desired refractive index;
   dissolving a chromophore in the solvent with the host polymer, wherein the chromophore has a chromophore refractive index greater than the desired refractive index, and wherein the chromophore refractive index changes with changes in an electric field;
   and evaporating the solvent to produce the article, wherein the article has an article refractive index that is about the same as the desired refractive index.
Aspect 16. The method of Aspect 15, wherein determining the desired refractive index comprises determining the desired refractive index wherein the desired refractive index is from about 1.42 to about 1.46 at a wavelength of about 1550 nanometers.
Aspect 17. The method of Aspect 15, wherein determining the desired refractive index comprises determining the desired refractive index wherein the desired refractive index is from about 1.43 to about 1.47 at a wavelength of about 810 nanometers.
Aspect 18. The method of Aspects 15-17, further comprising fluorinating the chromophore.
Aspect 19. The method of Aspects 15-18, wherein:
   dissolving the host polymer in the solvent comprises dissolving the host polymer wherein the host polymer has a host polymer solubility in water of about 1:1,000 or less grams host polymer per milliliter of distilled water at 20 degrees Celsius; and
   dissolving the chromophore in the solvent comprises dissolving the chromophore wherein the chromophore has a chromophore solubility in water of at least about 1:50 grams chromophore per milliliter of distilled water at 20 degrees Celsius.
Aspect 20. The method of Aspects 15-19, further comprising poling the chromophore in the article.

## Claims

1. An article comprising:
a host polymer having a host polymer refractive index; and
a chromophore, wherein the chromophore has a chromophore refractive index that is greater than the host polymer refractive index, wherein the chromophore refractive index changes with changes in an electric field, wherein the chromophore is dissolved within the host polymer, and wherein;
the article has an article refractive index between the host polymer refractive index and the chromophore refractive index.

2. The article of claim 1, wherein the host polymer comprises fluorine and/or wherein the chromophore comprises fluorine.

3. The article of claim 1 or 2, wherein the host polymer refractive index is about 1.445 or less at a wavelength of 1550 nanometers and/or wherein the article refractive index is from about 1.4 to about 1.5 at a wavelength of about 1550 nanometers.

4. The article of claims 1-3, wherein the host polymer is produced by reacting one or more monomers, wherein the one or more monomers comprise a fluorinated acrylate.

5. The article of claims 1-4, wherein the host polymer and the chromophore are chemically bound together.

6. The article of claims 1-5, wherein the chromophore is poled within the article.

7. The article of claims 1-6, wherein the article comprises the chromophore at about 10 weight percent or more, based on a total weight of the article.

8. The article of claims 1-7, wherein the article has an article glass transition temperature of about 70 degrees Celsius or higher.

9. The article of claims 1-8, wherein the host polymer comprises poly 2,2,2-trifluoroethyl methacrylate.

10. The article of claims 1-9, wherein the chromophore comprises 2-[4-(3-{3-[2-(4-{bis-[2-(tert-butyl-dimethyl-silanyloxy)-ethyl]-amino}-phenyl)-vinyl]-5,5-dimethyl-cyclohex-2-enylidene}-propenyl)-3-cyano-5,5-dimethyl-5H-furan-2-ylidene]-malononitrile (CLD1).

11. A composition comprising:
a host polymer having a host polymer refractive index of from about 1.4 to about 1.5 at 1550 nanometers;
a chromophore dissolved within the host polymer, wherein the chromophore has a chromophore refractive index greater than the host polymer refractive index, and wherein the chromophore refractive index changes with changes in an electric field.

12. A method of producing an article comprising:
determining a desired refractive index;
dissolving a host polymer in a solvent, wherein the host polymer has a host polymer refractive index less than the desired refractive index;
dissolving a chromophore in the solvent with the host polymer, wherein the chromophore has a chromophore refractive index greater than the desired refractive index, and wherein the chromophore refractive index changes with changes in an electric field; and
evaporating the solvent to produce the article, wherein the article has an article refractive index that is about the same as the desired refractive index.

13. The method of claim 12, wherein determining the desired refractive index comprises determining the desired refractive index wherein the desired refractive index is from about 1.42 to about 1.46 at a wavelength of about 1550 nanometers, or wherein determining the desired refractive index comprises determining the desired refractive index wherein the desired refractive index is from about 1.43 to about 1.47 at a wavelength of about 810 nanometers.

14. The method of claims 12 or 13, further comprising:
- fluorinating the chromophore; and/or
- poling the chromophore in the article.

15. The method of claims 12-14, wherein:
dissolving the host polymer in the solvent comprises dissolving the host polymer wherein the host polymer has a host polymer solubility in water of about 1:1,000 or less grams host polymer per milliliter of distilled water at 20 degrees Celsius; and
dissolving the chromophore in the solvent comprises dissolving the chromophore wherein the chromophore has a chromophore solubility in water of at least about 1:50 grams chromophore per milliliter of distilled water at 20 degrees Celsius.
